**Europäisches Patentamt**

**European Patent Office**

**Office européen des brevets**

(19)

(11) Veröffentlichungsnummer: **0 122 315**
**A2**

(12) # EUROPÄISCHE PATENTANMELDUNG

(21) Anmeldenummer: **83106210.4**

(22) Anmeldetag: **25.06.83**

(51) Int. Cl.³: **C 01 C 1/12**
**C 01 C 1/10**

(30) Priorität: **22.03.83 DE 3310222**

(43) Veröffentlichungstag der Anmeldung:
**24.10.84 Patentblatt 84/43**

(84) Benannte Vertragsstaaten:
**BE FR GB IT LU NL**

(71) Anmelder: **Dr. C. Otto & Comp. Gesellschaft mit
beschränkter Haftung
Christstrasse 9
D-4630 Bochum 1(DE)**

(72) Erfinder: **Ritter, Horst
Bergebuschstrasse 12
D-4300 Essen(DE)**

(74) Vertreter: **Radt, Finkener, Ernesti Patentanwälte
Heinrich-König-Strasse 119
D-4630 Bochum 1(DE)**

(54) **Verfahren zur Gewinnung von flüssigem Ammoniak aus Koksofengas.**

(57) Die Erfindung betrifft ein Verfahren zur Gewinnung von flüssigem Ammoniak aus Koksofengas, bei dem zunächst die Hauptmenge des Schwefelwasserstoffs in einem $H_2S$-Wascher mit Ammoniakwasser ausgewaschen und anschließend das im Gas enthaltene Ammoniak durch Auswaschen mit Wasser entfernt wird. Dabei ist vorgesehen, daß das dem Ammoniakwascher (2) ablaufende ammoniakhaltige Wasser in einer Entsäurerstufe (10) mittels Dampf entsäuert, die Hauptmenge der aus dem Entsäurer ablaufenden Flüssigkeit auf einen unter Druck betriebenen ersten Abtreiber (17) aufgegeben wird, in dessen oberem, als Waschstufe (19) ausgebildetem Abschnitt die mittels Dampf abgetriebenen Brüden mit Natronlauge gewaschen werden. Nach der Kondensation der Brüden in einer Kondensationsanlage (36) wird aus dem anfallenden Kondensat in einer Destillierkolonne (23) das Ammoniak mittels Dampf ausgetrieben. Anschließend werden die Brüden mit Natronlauge gewaschen und das Ammoniak wird nach dem Austritt aus der Destillierkolonne (23) kondensiert, während die die Waschstufe verlassende Natronlauge der Waschstufe (19) zugeführt wird. Die aus der Waschstufe (19) austretende beladene NaOH-Lösung wird einem zweiten Abtreiber (25) zugeführt, in dem sie zur Aufspaltung von fixen Ammoniakverbindungen von Kohlewasser benutzt wird, wobei die in dem Abtreiber (25) abgetriebenen Dämpfe dem Entsäurer (10) zugeführt werden können.

./...

FIG.1

83 903 EEF/HH — 1 — 0122315

## Verfahren zur Gewinnung von flüssigem Ammoniak aus Koksofengas

Die Erfindung betrifft ein Verfahren zur Gewinnung von flüssigem Ammoniak aus Koksofengas im Rahmen eines bekannten Verfahrens, bei dem aus dem Koksofengas zunächst die Hauptmenge des Schwefelwasserstoffs in einem $H_2S$-Wascher mit Ammoniakwasser ausgewaschen und anschließend das im Gas enthaltene Ammoniak durch Auswaschen mit Wasser, insbesondere mit enthärtetem Frischwasser und abgetriebenem Waschwasser, entfernt wird.

Es ist bekannt, die aus dem Ammoniakwascher ablaufende Waschflüssigkeit auf einen Abtreiber aufzugeben und die abgetriebenen Ammoniak und saure Gasbestandteile, wie Schwefelwasserstoff, Kohlendioxid und Cyanwasserstoff, enthaltenden Dämpfe einer weiteren Verwertungsanlage oder einer Anlage, in der die Dämpfe vernichtet werden, zuzuführen, während der Ablauf des Abtreibers als Waschwasser wiederverwendet wird. Bei der Aufarbeitung der Dämpfe in einer Verwertungsanlage erhält man Ammoniak, das mit Schwefelwasserstoff, Kohlendioxid und Cyanwasserstoff verunreinigt ist und kein verkaufsfähiges Produkt darstellt.

Die Aufgabe, die der Erfindung zugrundeliegt, besteht darin, das im Koksofengas enthaltene Ammoniak in möglichst reiner Form zu gewinnen.

Ausgehend von einem Verfahren der eingangs beschriebenen Art besteht die Erfindung darin, daß das aus dem Ammoniakwascher ablaufende ammoniakhaltige Wasser in einer Entsäurerstufe mittels Dampf entsäuert, die Hauptmenge der aus dem Entsäurer ablaufenden Flüssigkeit auf einen unter Druck betriebenen ersten Abtreiber aufgegeben wird, in dessen oberem, als Waschstufe ausgebildetem Abschnitt die mittels Dampf abgetriebenen Brüden mit Natronlauge gewaschen werden, und daß die abgetriebenen und gewaschenen Brüden in einer Kondensationsanlage kondensiert werden, worauf aus dem anfallenden Kondensat in einer Destillier-

- 2 -

kolonne mittels Dampf das Ammoniak ausgetrieben wird, die
Brüden zur restlosen Entfernung mitgerissener saurer Bestandteile mit Natronlauge gewaschen werden und nach dem
Austritt aus der Destillierkolonne das Ammoniak kondensiert
wird, während die die Waschstufe verlassende Natronlauge
als Waschlauge in dem unter Druck betriebenen Abtreiber benutzt wird, und die aus dieser Waschstufe austretende, mit
sauren Bestandteilen beladene NaOH-Lösung einem zweiten
Abtreiber zugeführt wird, in dem sie zur Aufspaltung der
fixen Ammoniakverbindungen benutzt wird, die in dem Kohlewasser enthalten sind, das in diesen Abtreiber eingeleitet
wird.

Weitere Merkmale der Erfindung ergeben sich aus den Unteransprüchen.

Der Erfindung liegt die überraschende Erkenntnis zugrunde,
daß die sauren Komponenten aus den warmen $NH_3$-Brüden, die
in dem unter Druck betriebenen Abtreiber ausgetrieben werden, von einer Natronlauge-Lösung, die nur für die Aufspaltung der fixen $NH_3$-Verbindung eingesetzt wird, so daß
ihr Einsatz mengenmäßig begrenzt ist, restlos ausgewaschen
werden, wenn die Lösung dabei nur bis zu etwa 50 % ausgenutzt wird. Mit dem Verfahren gemäß vorliegender Erfindung
gelingt es, aus dem Koksofengas flüssiges Ammoniak mit
einer Reinheit von bis zu 99,98 % zu gewinnen.

Ein Ausführungsbeispiel der Erfindung wird anhand der
Zeichnung erläutert. Es zeigen:

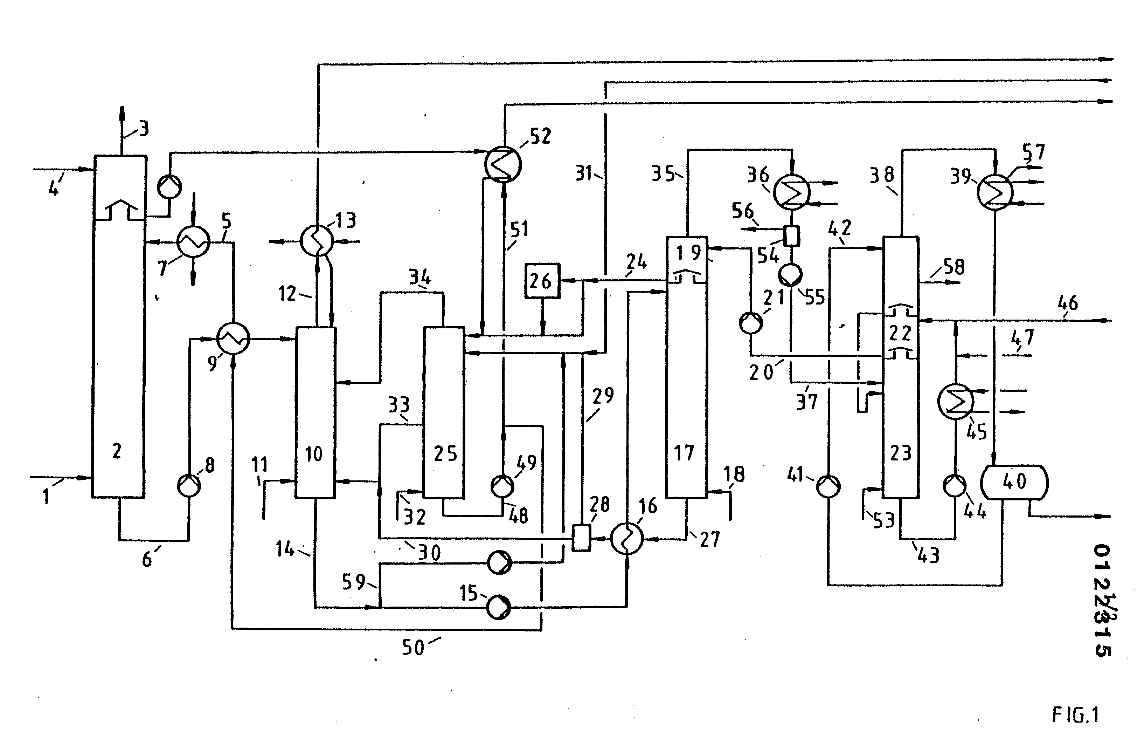

Figur 1   eine schematische Darstellung des erfindungsgemäßen Verfahrens und

Figur 2   ebenfalls schematisch eine zweckmäßige Ausführungsform zum Kondensieren der Brüden.

Das zu reinigende, von einem nicht dargestellten $H_2S$-Wascher kommende Koksofengas tritt durch die Leitung 1 in den $NH_3$-Wascher 2 ein, in dem das Ammoniak mit über die Leitungen 4 und 5 zugeführtem Waschwasser ausgewaschen wird. Das gereinigte Gas wird über die Leitung 3 der weiteren Verarbeitung zugeführt. Das aus dem Wascher 2 austretende Waschwasser gelangt über die Leitung 6, die Pumpe 8 und einen Wärmeaustauscher 9, auf den Kopf des Entsäurers 10, in dem die in der Flüssigkeit enthaltenen sauren Gasbestandteile, wie Schwefelwasserstoff, Kohlendioxid und Cyanwasserstoff durch über die Leitung 11 eingeleiteten Dampf bis auf einen Restgehalt ($H_2S$ 0,5 g/l, $CO_2$ 2 g/l, HCN 0,5 g/l) ausgetrieben werden. Das Sauergas 12 wird in einem Wärmeaustauscher 13 gekühlt und einer Aufbereitungsanlage zwecks Weiterverarbeitung zugeführt. Die Hauptmenge der aus dem Entsäurer 10 abfließenden Flüssigkeit wird über die Leitung 14, die Pumpe 15 und den Wärmeaustauscher 16 in einen unter Druck betriebenen ersten $NH_3$-Abtreiber 17 eingeleitet, in dem mit über die Leitung 18 zugeführtem Dampf das Ammoniak sowie die im Entsäurer 10 nicht ausgetriebenen sauren Komponenten gestrippt werden. Die Brüden durchlaufen eine Grobwaschstufe 19 im Oberteil des Abtreibers 17. Hier wird der größere Teil der sauren Bestandteile von einer vorbeladenen Natronlauge absorbiert, die über die Leitung 20 und die Pumpe 21 aus dem Mittelteil 22 einer Destillierkolonne 23 als Waschlösung zugeführt wird. Über die Leitung 24 wird die beladene Natronlauge enthaltende Waschlösung auf einen zweiten Abtreiber 25 oder zwecks weiterer Aufladung mit Schwefelwasserstoff zunächst auf einen $H_2S$-Wascher 26 und anschließend auf den Abtreiber 25 zur Aufspaltung der fixen Ammoniakverbindungen des Kohlewassers aufgegeben.

Die aus dem Sumpf des Abtreibers 1 über die Leitung 27 und den Wärmeaustauscher 16 abgezogene, unter Druck stehende Waschflüssigkeit wird zunächst der Entspannungskolonne 28 zugeführt und dort auf Abtreiberdruck entspannt.

Die dabei freiwerdenden Dämpfe werden über die Leitung 30 in den Entsäurer 10 und die entspannte Waschflüssigkeit über die Leitung 29 in den zweiten Abtreiber 25 eingegeben.

Über eine Leitung 31 wird Kohlewasser und über eine Leitung 59 ein Teilstrom des Ablaufes des Entsäurers 10 herangeführt und in die Leitung 31 und damit in den Abtreiber 25 eingeleitet. Durch über die Leitung 32 zugeführten Dampf werden zunächst mit Hilfe der Natronlauge die fixen Ammoniakverbindungen aufgespalten; anschließend wird das Ammoniak abgetrieben, das über die Leitung 34 dem Entsäurer 10 zugeführt wird. Über die Leitung 33 kann schwach mit Ammoniak angereicherter Dampf von dem Abtreiber 25 in den Entsäurer eingeleitet werden, so daß sich eine Dampfzufuhr über die Leitung 11 erübrigt. Durch diese Maßnahmen wird der $NH_3$-Gehalt des entsäuerten Wassers erhöht, so daß die auf den Abtreiber 17 aufzugebende Flüssigkeitsmenge sich verringert. Außerdem verringert sich der Eintrag der sauren Gasbestandteile in den Abtreiber 17. Ein Teil der aus dem Abtreiber 25 abfließenden Flüssigkeit wird über die Leitung 48, die Pumpe 49 sowie die Leitung 50, die Wärmeaustauscher 9 und 7 und die Leitung 5 zurück auf den $NH_3$-Wascher 2 gefördert, während der andere Teilstrom über die Leitung 51 und den Wärmeaustauscher 52 einer Weiterverarbeitung zugeführt wird.

Die am Kopf des Abtreibers 17 austretenden $NH_3$-Schwaden werden über die Leitung 35 dem Wärmeaustauscher oder Kondenser 36 zugeführt und dort kondensiert. Das ammoniakhaltige Kondensat gelangt über den Kondensatbehälter 54, die Pumpe 55 und die Leitung 37 in die Destillierkolonne 23. Durch Einblasen von Dampf über die Leitung 53 wird das Ammoniak aus dem Kondensat ausgetrieben und in der Zwischenstufe 22 nahezu vollständig von den sauren Komponenten befreit.

Im Oberteil der Kolonne 23 wird das Ammoniak weiter aufkonzentriert und tritt über Kopf aus. Über die Leitung 38 gelangen die Ammoniakdämpfe in den Kondenser 39, in dem sie verflüssigt werden. Von da aus werden sie dem Stapelbehälter 40 zugeführt.

Mittels der Pumpe 41 wird ein Rücklauf über die Leitung 42 auf den Kopf der Destillierkolonne 23 gegeben. Das aus dem Sumpf der Kolonne 23 austretende, vom Ammoniak befreite Kondensat wird über die Leitung 43, die Pumpe 44 und einen Wärmeaustauscher 45 abgeführt und zusammen mit Frischwasser aus der Leitung 47 dazu benutzt, eine 45 %ige Natronlauge aus der Leitung 46 auf 3 bis 6 %, vorzugsweise 4 %, zu verdünnen. Diese NaOH-Lösung wird der Zwischenstufe 22 im Mittelteil der Destillierkolonne 23 zugeführt und als Waschlösung verwendet, durch die die Spuren der vom Brüdengasstrom mitgeführten sauren Gasbestandteile bis zur Nachweisgrenze hin entfernt werden können. Die schwach vorbeladene Lauge wird dann über die Leitung 20 und die Pumpe 21 auf die Waschstufe 19 der Kolonne 17 gefördert. Diese schwach angereicherte Lauge entfernt die sauren Gasbestandteile des Brüdengasstromes bis auf einen kleinen Restgehalt.

Die NaOH-Lösung wird in die Zwischenstufe 22 in einer solchen Menge aufgegeben, daß pro kg im Kohlewasser vorhandenen fixen Ammoniaks etwa 2,6 kg 100 %iger NaOH vorliegen.

Es hat sich dabei überraschenderweise gezeigt, daß, wenn die doppelte der stöchiometrischen Menge an Natronlauge zum Entfernen der sauren Gasbestandteile aufgegeben wird, der Restgehalt an sauren Komponenten im Gas zum Teil nicht mehr nachgewiesen werden und so ein Ammoniak mit einer hohen Reinheit von 99,98 % gewonnen werden kann. Bei der vorstehend beschriebenen Schaltung des Verfahrens entspricht dies der für die Aufspaltung der fixen $NH_3$-Verbindungen erforderlichen Menge an Natronlauge.

Aus den Leitungen 56, 57 und 58 wird ständig eine Inertgas enthaltende Brüdengasmenge abgezogen und dem Entsäurer 10 oder dem Koksofengas vor Eintritt in den $H_2S$- oder $NH_3$-Wascher zugeleitet.

Die wasserdampfhaltigen $NH_3$-Schwaden aus dem Abtreiber 17, die eine Temperatur von z.B. 175° C haben, gelangen über die Leitung 35 in den Wärmeaustauscher oder Kondenser 36, in dem sie auf eine Temperatur von ca. 135° C heruntergekühlt und dabei kondensiert werden. Das anfallende Kondensat wird anschließend über die Leitung 20 zur Entfernung des Wassers in die Destillierkolonne gegeben.

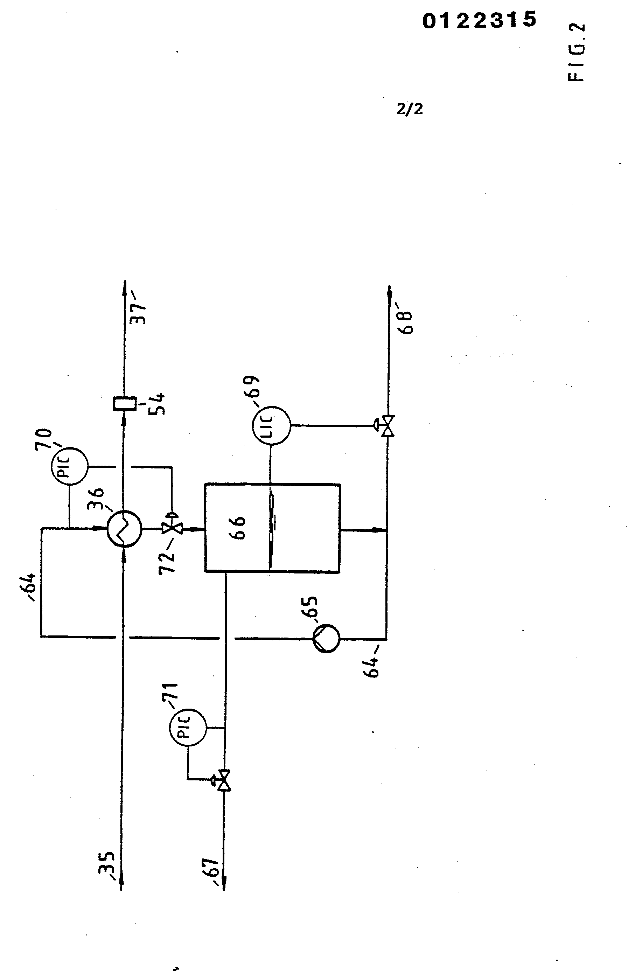

Bei einer bevorzugten, auf Figur 2 dargestellten Ausführungsform wird der Kondenser 36 in einen Kühlwasserkreislauf 64 eingebunden, der über eine Pumpe 65 aufrecherhalten wird und einen Entspannungsbehälter 66 enthält. Der Druck in der Kühlwasserleitung beträgt dabei vor dem Eintritt in den Kondenser 36 etwa 5 bis 6 bar, die Temperatur des Kühlwassers mindestens 100° C, vorzugsweise 120° C und darüber. Wenn das Kühlwasser beispielsweise mit einer Temperatur von 122° C in den Kondenser eintritt, erwärmt es sich bei der oben angegebenen Schwadentemperatur auf eine Temperatur von ca. 150° C. Anschließend wird das Kühlwasser in dem Entspannungsbehälter 66 auf etwa 2 bar entspannt. Dadurch wird die vom Kühlwasser in dem Kondenser aufgenommene Wärmemenge in dem Entspannungsbehälter 66 in Form von Dampf wieder freigesetzt, der beispielsweise über die Leitung 67 auf einen Ammoniakabtreiber aufgegeben werden kann. Der Kühlwasserkreislauf wird mit Wasser vom Ammoniakabtreiber, das eine Temperatur von etwa 85° C hat, über die Leitung 68 aufgefüllt. Mit 69, 70 und 71 sind übliche Regeleinrichtungen bezeichnet. Mit dem Standregler 69 wird der Wasserstand im Entspannungsbehälter reguliert, mit dem Regler 70 in Verbindung mit dem Entspannungsventil 72 der Druck in der Leitung 64, während der Regler 71 dazu dient, in dem Entspannungsbehälter einen Druck von 2 bar aufrechtzuerhalten.

.Radt, Finkener, Ernesti
Patentanwälte

Heinrich-König-Straße 119
4630 Bochum 1
Fernsprecher (0234) 47727/28
Telegrammadresse Radtpatent Bochum
Telex· 825769 radt d

- 8 -

83 903
EEF/HH

## Verfahren zur Gewinnung von flüssigem Ammoniak aus Koksofengas

### A n s p r ü c h e

1. Verfahren zur Gewinnung von flüssigem Ammoniak aus Koksofengas, bei dem zunächst die Hauptmenge des Schwefelwasserstoffs in einem $H_2S$-Wascher mit Ammoniakwasser ausgewaschen und anschließend das im Gas enthaltene Ammoniak durch Auswaschen mit Wasser entfernt wird, d a d u r c h g e k e n n z e i c h n e t , daß das aus dem Ammoniakwascher ablaufende ammoniakhaltige Wasser in einer Entsäurerstufe mittels Dampf entsäuert, die Hauptmenge der aus dem Entsäurer ablaufenden Flüssigkeit auf einen unter Druck betriebenen ersten Abtreiber aufgegeben wird, in dessen oberem, als Waschstufe ausgebildetem Abschnitt die mittels Dampf abgetriebenen Brüden mit Natronlauge gewaschen werden, und daß die abgetriebenen und gewaschenen Brüden in einer Kondensationsanlage kondensiert werden, worauf aus dem anfallenden Kondensat in einer Destillierkolonne mittels Dampf das Ammoniak ausgetrieben wird, die Brüden zur restlosen Entfernung mitgerissener saurer Bestandteile mit Natronlauge gewaschen werden und nach dem Austritt aus der Destillierkolonne das Ammoniak kondensiert wird, während die die Waschstufe verlassende Natronlauge als Waschlauge in dem unter Druck betriebenen Abtreiber benutzt wird, und die aus dieser Waschstufe austretende, mit sauren Bestandteilen beladene NaOH-Lösung einem zweiten Abtreiber zugeführt wird, in dem sie zur Aufspaltung der fixen Ammoniakverbindungen benutzt wird, die in dem Kohlewasser enthalten sind, das in diesen Abtreiber eingeleitet wird.

- 9 -

2. Verfahren nach Anspruch 1, dadurch gekennzeichnet, daß die in dem zweiten Abtreiber abgetriebenen Dämpfe dem Entsäurer zugeführt werden.

3. Verfahren nach den Ansprüchen 1 und 2, dadurch gekennzeichnet, daß ein Teilstrom der aus dem Entsäurer ablaufenden Flüssigkeit zusammen mit dem Kohlewasser in den zweiten Abtreiber eingeleitet wird.

4. Verfahren nach den Ansprüchen 1 bis 3, dadurch gekennzeichnet, daß der erste Abtreiber unter einem Druck betrieben wird, der etwas oberhalb des Dampfdruckes des Ammoniaks bei Umgebungstemperatur liegt.

5. Verfahren nach den Ansprüchen 1 bis 4, dadurch gekennzeichnet, daß die zum Waschen der Brüden verwendete Natronlauge in einer Konzentration von 3 bis 6 %, vorzugsweise 4 %, eingesetzt wird.

6. Verfahren nach den Ansprüchen 1 bis 5, dadurch gekennzeichnet, daß die erforderliche Menge an Natronlauge, die zur Aufspaltung der im Kohlewasser enthaltenen fixen Ammoniakverbindungen verwendet wird und die zum Waschen der Brüden im ersten Abtreiber und in der Destillierkolonne eingesetzt wird, mindestens der 1,5-fachen, vorzugsweise der 2-fachen stöchiometrischen Menge der in den Brüden enthaltenen sauren Gasbestandteile entspricht.

7. Verfahren nach den Ansprüchen 1 bis 6, dadurch gekennzeichnet, daß die aus der Waschstufe des unter Druck betriebenen Abtreibers ablaufende Waschlösung, bevor sie in den zweiten Abtreiber eingeleitet wird, zur Feinentschwefelung des Koksofengases in einem $NH_3$- oder $H_2S$-Wascher verwendet wird.

- 10 -

8. Verfahren nach den Ansprüchen 1 bis 7, dadurch gekennzeichnet, daß das aus dem Sumpf der Destillierkolonne ablaufende, noch schwach mit Ammoniak beladene Wasser zum Verdünnen der konzentrierten Natronlauge auf die gewünschte Konzentration benutzt wird.

9. Verfahren nach den Ansprüchen 1 bis 8, dadurch gekennzeichnet, daß die aus dem Sumpf des unter Druck betriebenen Abtreibers abgezogene Flüssigkeit entspannt und die dabei freiwerdenden Dämpfe dem Entsäurer zugeführt werden, während die entspannte Waschflüssigkeit in den zweiten Abtreiber eingeleitet wird.

10. Verfahren nach den Ansprüchen 1 bis 9, dadurch gekennzeichnet, daß die bei der Kondensation der ammoniakhaltigen Brüden freiwerdenden und die bei der Destillation anfallenden Inertgase in den Entsäurer eingeleitet werden.

11. Verfahren nach den Ansprüchen 1 bis 9, dadurch gekennzeichnet, daß die bei der Kondensation der ammoniakhaltigen Brüden sowie die bei der Destillation anfallenden Inertgase dem zu reinigenden Koksofengas beigemischt werden, bevor dieses in den Schwefelwasserstoffwascher eingeleitet wird.

12. Verfahren nach den Ansprüchen 1 bis 11, dadurch gekennzeichnet, daß der indirekte Wärmeaustauscher oder Kondenser zum Kondensieren der aus dem ersten Abtreiber austretenden wasserdampfhaltigen $NH_3$-Brüden in einem Kühlwasserkreislauf angeordnet ist, der über eine Pumpe aufrechterhalten wird und einen im Strömungsweg hinter dem Wärmeaustauscher liegenden Entspannungsbehälter enthält, in dem die Kühlflüssigkeit von einem vor dem Eintritt in den Wärmeaustauscher herrschenden Druck von etwa 5 bis 6 bar unter Freisetzen von Dampf auf einen Druck von etwa

- 11 -

2 bar entspannt wird, wobei die Temperatur der Kühlflüssigkeit über $100^\circ$ C, vorzugsweise bei $120^\circ$ C oder darüber liegt.

13. Verfahren nach Anspruch 12, dadurch gekennzeichnet, daß der in dem Entspannungsbehälter freigesetzte Dampf in einen $NH_3$-Abtreiber eingeleitet wird und daß als Kreislaufwasser von einem $NH_3$-Abtreiber abgezogenes Wasser verwendet wird.

FIG.1

FIG.2